# EUROPÄISCHE PATENTSCHRIFT

(11) **EP 1 276 998 B1**
(45) Veröffentlichungstag und Bekanntmachung des Hinweises auf die Patenterteilung: **30.05.2007**
(21) Anmeldenummer: 01933789.8
(22) Anmeldetag: 04.04.2001
(51) Int. Cl.: F16D 65/095

(54) **SCHEIBENBREMSE MIT EINER BREMSBELAGHALTERUNG UND BREMSBELAG**
DISK BRAKE WITH A BRAKE LINING HOLDING DEVICE AND BRAKE LINING
FREIN A DISQUE COMPORTANT UNE FIXATION DE GARNITURE DE FREIN ET UNE GARNITURE DE FREIN

(30) Priorität: 13.04.2000 DE 10018523
(43) Veröffentlichungstag der Anmeldung: 22.01.2003
(73) Patentinhaber: KNORR-BREMSE SYSTEME FÜR NUTZFAHRZEUGE GMBH, 80809 München (DE)
(72) Erfinder: BAUMGARTNER, Hans, 85368 Moosburg (DE); IRASCHKO, Johann, 85301 Schweitenkirchen (DE)
(74) Vertreter: Mattusch, Gundula
(86) Internationale Anmeldenummer: PCT/EP2001/003813
(87) Internationale Veröffentlichungsnummer: WO 2001/079722

(56) Entgegenhaltungen:
- DE-A- 2 250 742
- US-A- 3 396 824
- US-A- 4 629 037

## Beschreibung

Die Erfindung betrifft eine Scheibenbremse nach dem Oberbegriff des Anspruchs 1.

Eine gattungsgemäße Schiebenbremse ist aus der US 3,396,824 bekannt.

Eine weiter Scheibenbremse ist aus der GB 1470919 bekannt. Bei der in dieser Schrift offenbarten Scheibenbremse schlägt der den felgenseitige Bremsbelag tragende Bremssattelabschnitt beim Erreichen der Verschleißgrenze des Belages an. Dies ist vorgesehen, da sowohl bei Schiebe - oder Festsattelscheibenbremsen der bekannten Bauarten das Problem besteht, daß bei einem übermäßigen Verschleiß von Bremsbelag und/oder Bremsscheibe der Bremsbelag soweit in Richtung der Bremsscheibe verschoben wird, daß keine ausreichende Überdeckung des Bremsbelages mit den Abstützflächen des Bremssattels bzw. Bremsträgers. mehr besteht und der Bremsbelag bei einer Bremsbetätigung in den Spalt zwischen der Belaghalterung des Bremssattels bzw. Bremsträgers und Bremsscheibe gezogen wird.

Die Folgen eines derartigen Fehlers können schwerwiegend sein. So kann der eingeklemmte Bremsbelag das Rad während der Fahrt blockieren, was Beschädigungen des Reifens und der Achse nach sich ziehen kann. Dieser Fehler tritt nach der Erkenntnis der Erfindung besonders dann auf, wenn Einflüsse vorliegen, die einen stark ungleichmäßigen Verschleiß zwischen den beiden Bremsbelägen hervorrufen, so daß der kritische Verschleißzustand eines der beiden Bremsbeläge für den Betreiber des Fahrzeuges unerwartet früh eintritt. Solche Einflüsse können z.B. starke Schmutzbelastung nur einer der beiden Bremsscheibenreibflächen sein oder eine schwergängige Schiebeführung einer Schiebesattelscheibenbremse.
Der frühe Verschleiß eines einzelnen Belages ist insbesondere problematisch, wenn Verschleißüberwachungssysteme diesen Zustand nicht rechtzeitig anzeigen.

Es sind bereits Maßnahmen zur Verhinderung des übermäßigen Verschleißes bekannt, die jedoch keine ausreichende Wirkung aufweisen und/oder die Wirkung der Bremse bei Notbremssituationen unzulässig beeinträchtigen.

So kann z.B. der übermäßige Verschleiß des äußeren Bremsbelages bei Schiebesattel-Scheibenbremsen dadurch vermieden werden, daß bei Erreichen des Grenzverschleißzustandes die Verschiebbarkeit des Bremssattels durch einen Anschlag begrenzt wird. Diese Lösung für den äußeren Bremsbelag wird z.B. bei Schiebesattel - Scheibenbremsen der Knorr-Bremse Systeme für Nutzfahrzeuge SB-Baureihe (z.B. SB6000, SB7000) serienmäßig ausgeführt

Eine weitere mögliche Maßnahme ist eine Begrenzung der Zustelldrehbewegung der Gewindespindeln des Verschleißnachstellsystems. Damit kann vermieden werden, daß der Gesamtverschleiß beider Bremsbeläge zusammen eine zulässigen Wert überschreitet. Bei Auftreten eines stark ungleichmäßigen Verschleißes ist diese Maßnahme jedoch für den stärker verschleißenden Bremsbelag nicht wirksam.

Es wurde auch bereits vorgeschlagen den achsfesten Bremsbelaghalter so auszubilden, daß die Zuspannkraft des Bremssattels bei Erreichen des kritischen Verschleißzustandes vom Bremsbelaghalter aufgenommen wird und die Bremsbeläge nicht mehr mit der Bremsscheibe in Kontakt gebracht werden. Dieser Vorschlag bringt aber das Problem der Verminderung bzw. des vollständigen Ausfalles der Bremswirkung im Notbremsfall mit sich (siehe z.B. die DE 198 23 034 C1).

Ausgehend von dem eingangs erwähnten gattungsgemäßen Stand der Technik widmet sich die Erfindung dem Problem, die gattungsgemäße Scheibenbremse derart weiterzuentwickeln, daß eine sichere Verschleißnachstellbegrenzung
für die Bremsbeläge realisiert wird, ohne daß die Gefahr besteht, daß die Bremswirkung der Scheibenbremse in Notsituationen wesentlich verringert wird.

Die Erfindung erreicht dieses Ziel durch den Gegenstand des Anspruches 1.

Nach der Erfindung ist der Anschlag derart ausgelegt, daß er beim Übersteigen einer ersten vorgegebenen Grenz-Bremszuspannkraft zunächst elastisch und dann bei Überschreiten einer zweiten, höheren Grenz-Bremszuspannkraft plastisch verformbar ist.

Der Anschlag kann auch dadurch gebildet werden, daß lediglich der Bremsbelag einen Vorsprung aufweist, welcher den Verschiebeweg des Bremsbelagträgers begrenzt.

Wesentlich ist, daß entweder am Bremsbelag(träger) und/oder an der übrigen Scheibenbremse bzw. deren Belaghalterung - z.B. am Bremssattel oder Bremsträger realisiert - ein elastisch oder plastisch verformbares Element ausgebildet wird, welches derart ausgebildet ist, daß es den Nachstellweg des Bremsbelages zwar an sich begrenzt aber beim Überschreiten einer Grenzkraft nachgibt, so daß bei hohen Bremskräften trotz weitgehend verschlissener Beläge mit dem entsprechenden Bremsbelag doch noch gebremst werden kann.

Nach der Erfindung kommen die Bremsbeläge bei Erreichen des Grenzverschleißzustandes mit ihrer Belagträgerplatte mit dem Anschlag - z.B. an der achsfesten Bremsbelaghalterung - in Kontakt, durch den ein weiteres Verschieben der Bremsbeläge bis zu einem vorgegebenen Betrag der Bremsbetätigungskraft unterbunden wird. Bei Überschreiten dieser vorgegebenen Betätigungskraft wird jedoch durch elastische und/oder plastische Verformung der Abstützelemente am Bremsbelag oder der Bremsbelaghalterung ein zusätzlicher Verschiebeweg und damit zusätzlicher Verschleiß des jeweiligen Bremsbelages zur Ausführung mindestens einer Notbremsung freigegeben.

Mit der Erfindung werden also eine Scheibenbremse und ein für diese Scheibenbremse besonders geeigneter Bremsbelag geschaffen, welche mit Hilfe einfacher konstruktiver Maßnahmen dazu ausgelegt sind, bei Erreichen des Grenzverschleißzustandes eines oder beider Bremsbeläge den weiteren Verschleiß bereits abgenutzter Bremsbeläge bei üblichen Anpassungsbremsungen zu vermeiden und dennoch im Notbremsfall jedoch auch die bereits verschlissenen Bremsbeläge zur Erzeugung einer ausreichenden Bremswirkung mit der Bremsscheibe in Kontakt zu bringen.

Preisgünstige konstruktive Varianten der Erfindung werden dadurch gebildet, daß
a) der Anschlag bei der Bremsbelaghalterung einer Schiebesattelscheibenbremse wenigstens eine am Bremsträger Ausnehmung aufweist ,
b) oder daß der Anschlag bei der Bremsbelaghalterung einer Festsattelscheibenbremse eine am Bremssattel ausgebildete Ausnehmung aufweist,
c) in welche wenigstens ein Vorsprung des Bremsbelagträgers eingreift, welcher beim Überschreiten der Grenz-Bremszuspannkraft elastisch und/oder plastisch verformbar ist.

Je nach Auslegung der Scheibenbremse und der zugehörigen Beläge ist es prinzipiell denkbar, daß der wenigstens eine Vorsprung einstückig mit dem Bremsbelagträger oder als separates, mit der Belagträgerplatte verbindbares Element ausgebildet ist.

Nach einer bevorzugten und die Herstellung des Bremsbelagträgers nur unwesentlich verteuernden Variante der Erfindung wird der wenigstens eine Vorsprung als das Ende einer biegsamen Zunge ausgeführt, welche an den Bremsbelagträger angeformt oder angesetzt ist. Vorzugsweise ist je eine der Biegezungen relativ zur Bremsscheibendrehrichtung im Ein- und/oder Auslaufbereich des Bremsbelagträgers angeordnet. Bevorzugt weisen ferner die Ausnehmungen im Bremssattel oder Bremsbelagträger eine solche Tiefe auf, daß bei Erreichen des Grenzverschleißzustandes ein Anschlag für die Vorsprünge der Belagträgerplatte gebildet wird.

Es ist auch denkbar, daß der wenigstens eine Anschlag an den Bremsbelagabstützflächen der Bremsbelaghalterung mit der Bremsbelagdalterung einstückige ausgebildete oder mit dieser verbundene Anform- oder Ansatzelemente umfaßt.

Weitere vorteilhafte Ausführungsformen der Erfindung sind den übrigen Unteransprüchen zu entnehmen.

Nachfolgend wird die Erfindung anhand von Ausführungsbeispielen unter Bezug auf die Zeichnung näher beschrieben. Es zeigt:
- Fig. 1a, b: eine Seitenansicht und einen Schnitt durch Abschnitte einer erfindungsgemäßen Scheibenbremse mit am Bremsträger ausgebildeten Bremsbelaghalterungen;
- Fig. 2a, b: eine Seitenansicht und einen Schnitt durch Abschnitte einer weiteren erfindungsgemäßen Scheibenbremse mit am Bremsträger ausgebildeten Bremsbelaghalterungen.

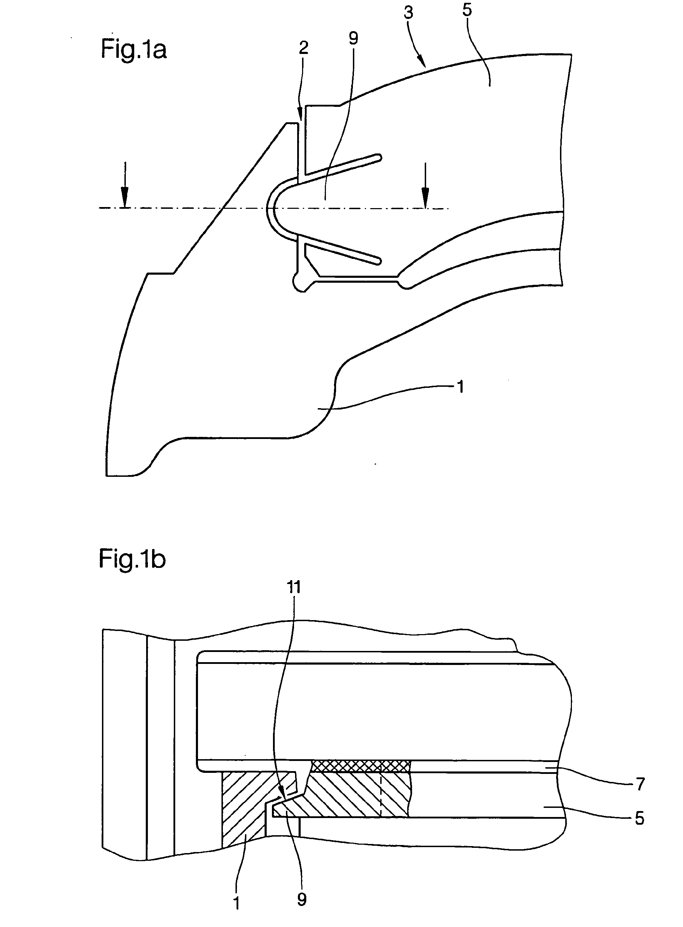

Fig. 1 zeigt einen Bremsträger 1 einer Schiebesattel-Scheibenbremse, wie sie beispielsweise in elektromechanischer, pneumatischer oder hydraulischer Betätigung für Nutzfahrzeuge einsetzbar ist. Ein Belagschacht 2 des Bremsträgers 1 dient als Bremsbelaghalterung.

In den Belagschacht 2 ist ein Bremsbelag 3 mit einem Bremsbelagträger 5 und einem darauf befestigten Bremsbelagmaterial 7 eingesetzt, welches - wie in Fig. 1b zu erkennen - bereits relativ stark abgenutzt ist.

Im Seitenbereich (Einlaufbereich der Bremsscheibe 7 ist der Bremsbelagträger 5 mit einem seitlichen Vorsprung 9 versehen, der als Biegezunge ausgebildet ist, welche in die Seiten des Bremsbelagträgers 5 eingeschnitten ist. Diese Biegezunge 9 greift in eine komplementäre Ausnehmung 11 eines Bremsbelagträgers 5 ein. Die als Biegezungen 9 mit vorgegebener Biegelänge bzw. Biegesteifigkeit ausgebildetene Vorsprünge sind hier zwar mit der Belagträgerplatte 5 einstückig ausgebildet, sie können aber auch Bestandteil eines separaten Bauelementes sein, welches mit der Belagträgerplatte 5 durch Schweißen, Nieten etc. fest verbunden ist.

Die Ausnehmungen 11 in der Bremsbelaghalterung des Bremsträgers 1 sind in ihrer Tiefe derart begrenzt, daß bei Erreichen des Grenzverschleißzustandes für die Biegezungen 9 eine Verschiebewegbegrenzung in Form eines Anschlags gebildet wird.

Beim Erreichen des Grenzverschleißzustandes kommt der Bremsbelagträger 5 an beiden Enden über die freigeschnittenen Biegezungen 9 mit den Endwandungen am Ende der Ausnehmungen 11 des Bremsträgers 1 in Kontakt und eine weitere Verschiebung des Bremsbelages wird zunächst verhindert. Überschreitet die Bremsbetätigungskraft jedoch ein bestimmtes vorgegebenes Niveau werden die freigeschnittenen Biegezungen 9 des Bremsbelagträgers 5 mit einem übermäßigen Biegemoment belastet, so daß sie zunächst elastisch und bei zunehmender Beanspruchung auch geringfügig plastisch verformt werden. Dadurch wird der zur Ausführung mindestens einer Notbremsung erforderliche zusätzliche Verschiebeweg des Bremsbelages 3 freigegeben und der Bremsbelag kontaktiert die Bremsscheibe 21.

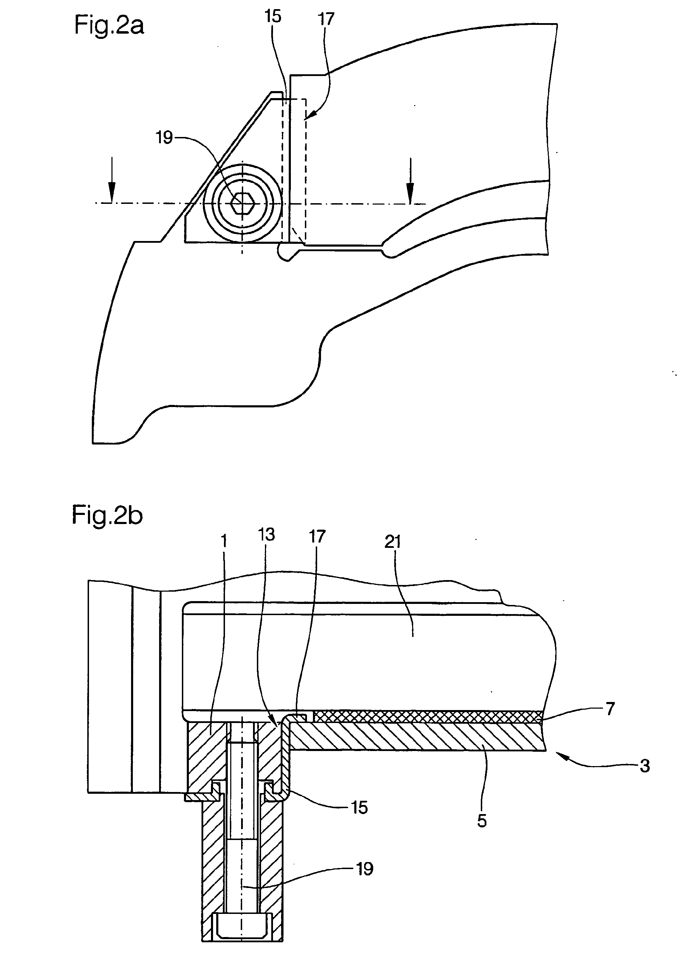

In der Ausführungsvariante nach Fig. 2 wird der Anschlag an den Bremsbelagabstützflächen 13 der Bremsbelaghalterung durch mit der Bremsbelaghalterung verschraubte oder auf andere Weise fest verbundene Winkelblechelemente 15 ausgeführt. Diese Winkelblechelemente 15 bestehen vorzugsweise aus hochfestem Stahlblech und sind an dem der Bremsscheibe zugewandten Ende mit einer in Richtung des Bremsbelages weisenden Abwinklung 17 versehen und sind mit Bolzen 19 am Bremsbelagträger befestigt, z.B. an den Sattelagerungen.

Der Bremsbelag 3 steht an beiden Seiten mit seinem Belagträger 5 mit diesen Anschlagelementen 15 in Wirkverbindung. Bei Erreichen des Grenzverschleißzustandes kommt der Bremsbelagträger 5 mit den Abwinklungen 17 der Winkelelemente 15 in Kontakt und das weitere Verschieben des Bremsbelages 3 wird zunächst vermieden. Beim Überschreiten der vorgegebenen Betätigungskraft der Bremse wird der zur Ausführung mindestens einer Notbremsung erforderliche zusätzliche Verschiebeweg des Bremsbelages 3 durch elastische und/oder plastische Verformung der Abwinklungen 17 (und/oder - hier nicht dargestellt - der Biegezungen 9) in der bereits beschriebenen Weise freigegeben.

Bei der Ausführungsvariante der Fig. 2 besteht bei entsprechender Dimensionierung der Abwinklungen 17 somit auch die Möglichkeit dazu, die notwendige Verformung zur Freigabe des zusätzlichen Verschleißweges mit dem Winkelelement 15 zu erzeugen. In diesem Fall müssen die Winkelelemente 15 ausgetauscht werden, wenn der Grenzverschleißzustand überschritten wurde. Es ist jedoch nicht unbedingt notwendig, am Bremsbelag 3 eine Biegezunge 9 auszubilden, so daß die Aufwendungen für das Einschneiden der Biegezunge 9 vermieden werden können.

### Bezugszeichen

| | |
|---|---|
| Bremsträger | 1 |
| Belagschacht | 2 |
| Bremsbelag | 3 |
| Bremsbelagträger | 5 |
| Bremsbelagmaterial | 7 |
| Vorsprung, Biegezunge | 9 |
| Ausnehmung | 11 |
| Bremsbelagabstützflächen | 13 |
| Winkelblechelemente | 15 |
| Abwinklung | 17 |
| Bolzen | 19 |
| Bremsscheibe | 21 |

## Patentansprüche

1. Scheibenbremse mit einer Bremsbelaghalterung (2) für einen in Richtung einer Bremsscheibe (21) zuspannbaren Bremsbelag (3) mit einer Belagträgerplatte (5) und einem darauf angeordneten Bremsbelagmaterial (7), wobei ein Anschlag zur Nachstellwegbegrenzung des Bremsbelages (3) vorgesehen ist, **dadurch gekennzeichnet, daß** der Anschlag (9, 11, 17) zur Nachstellwegbegrenzung des Bremsbelages unter Einwirkung einer vorgegebenen, von der Scheibenbremse erzeugbaren, Bremszuspannkraft verformbar ist, **dadurch gekennzeichnet, daß** der Anschlag (9, 11, 17) derart ausgelegt ist, daß er beim Übersteigen einer ersten vorgegebenen Grenz-Bremszuspannkraft zunächst elastisch und dann bei Überschreiten einer zweiten, höheren Grenz-Bremszuspannkraft plastisch verformbar ist.

2. Scheibenbremse nach Anspruch 1, **dadurch gekennzeichnet, daß** der Anschlag (9,11,17)
a) bei der Bremsbelaghalterung (2) einer Schiebesattelscheibenbremse wenigstens eine am Bremsträger (1) Ausnehmung (11) aufweist,
b) oder bei der Bremsbelaghalterung einer Festsattelscheibenbremse eine am Bremssattel ausgebildete Ausnehmung aufweist,
c) in welche wenigstens ein Vorsprung (9) des Bremsbelagträgers (5) eingreift, welcher beim Überschreiten der Grenz-Bremszuspannkraft elastisch und dann plastisch verformbar ist.

3. Scheibenbremse nach einem der vorstehenden Ansprüche, **dadurch gekennzeichnet, daß**
a) der wenigstens eine Vorsprung (9) einstückig mit dem Bremsbelagträger (5) ausgebildet
b) oder als separates, mit dem Bremsbelagträger (5) verbindbares Element ausgebildet ist.

4. Scheibenbremse nach einem der vorstehenden Ansprüche, **dadurch gekennzeichnet, daß** der wenigstens eine Vorsprung als das Ende einer biegsamen Zunge (9) ausgeführt ist, welche an den Bremsbelagträger (5) angeformt oder angesetzt ist.

5. Scheibenbremse nach Anspruch 4, **dadurch gekennzeichnet, daß** je eine der Biegezungen (9) relativ zur Bremsscheibendrehrichtung im Ein- und Auslaufbereich des Bremsbelagträgers (5) angeordnet ist.

6. Scheibenbremse nach Anspruch 4 oder 5, **dadurch gekennzeichnet**, die wenigstens eine Biegezunge (9) auf eine vorgegebene Biegelänge im Bremsbelagträger (5) freigeschnitten oder als separates Bauteil mit entsprechender Biegelänge auf dem Bremsbelagträger (5) befestigt ist.

7. Scheibenbremse nach einem der vorstehenden Ansprüche, **dadurch gekennzeichnet, daß** die Ausnehmungen (11) im Bremssattel oder Bremsträger (1) eine solche Tiefe aufweisen, daß bei Erreichen des Grenzverschleißzustandes die Vorsprünge (9) der Belagträgerplatte (5) am Bremssattel oder Bremsträger (1) zur Anlage kommen.

8. Scheibenbremse nach einem der vorstehenden Ansprüche, **dadurch gekennzeichnet**, der wenigstens eine Anschlag (5) an den Bremsbelagabstützflächen der Bremsbelaghalterung mit der Bremsbelaghalterung einstückige ausgebildete oder mit dieser verbundene Anform- oder Ansatzelemente (15) aufweist.

9. Scheibenbremse nach Anspruch 8, **dadurch gekennzeichnet, daß** die Ansatzelemente als an den Bremsträger oder Bremssattel ansetzbare Winkelblechelemente (15) ausgebildet sind, welche an dem der Bremsscheibe (21) zugewandten Ende eine in Richtung des Bremsbelages (3) weisende Abwinklung (17) aufweisen, welche den Verschiebeweg des Bremsbelagers (3) begrenzt.

## Claims

1. Disc brake including a brake-lining holding means (2) for a brake lining (3) adapted to be applied in a direction towards a brake disc (21), comprising a lining support plate (5) and a brake lining material (7) disposed thereon, with a stop being provided to limit the distance of adjustment of said brake lining (3), **characterised in that** said stop (9, 11, 17) for limitation of the distance of adjustment of said brake lining is adapted to be deformed under the action of a predetermined brake application force that may be generated by said disc brake, **characterised in that** said stop (9, 11, 17) is so designed that when a first predetermined limit brake application force is exceeded it is capable of undergoing first elastic deformation and, when a second higher limit brake application force is exceeded, it is capable of undergoing subsequent plastic deformation.

2. Disc brake according to Claim 1, **characterised in that**
(a) in the case of a brake-lining holding means (2) of a sliding-calliper disc brake, said stop (9, 11, 17) presents at least one recess (11) formed on said brake support adaptor (1),
(b) or in the case of a brake-lining holding means of a fixed-calliper disc brake, said stop (9, 11, 17) presents a recess formed on the brake calliper,
(c) into which recess engages at least one nose (9) of said brake-lining support (5) that is adapted to undergo elastic and subsequently plastic deformation when said limit brake application force is exceeded.

3. Disc brake according to any of the preceding Claims, **characterised in that**
(a) said at least one nose (9) is formed as integral part of said brake-lining support (5),
(b) or is formed as separate element adapted to be connected to said brake-lining support (5).

4. Disc brake according to any of the preceding Claims, **characterised in that** said at least one nose is configured as the end of a flexible finger (9) that is moulded on or attached to said brake-lining support (5).

5. Disc brake according to Claim 4, **characterised in that** one respective finger among said bending fingers (9) is disposed in the entry and exit zone of said brake-lining support (5), relative to the sense of rotation of the brake disc.

6. Disc brake according to Claim 4 or 5, **characterised in that** said at least one bending finger (9) is cut free to have a predetermined bending length in said brake-lining support (5) or is fastened as separate component having a suitable bending length on said brake-lining support (5).

7. Disc brake according to any of the preceding Claims, **characterised in that** said recesses (11) in the brake calliper or in said brake support adaptor (1) have such a depth that when the limit wear condition is reached said noses (9) of said brake-lining support plate (5) bear against the brake calliper or said brake support adaptor (1).

8. Disc brake according to any of the preceding Claims, **characterised in that** said at least one stop on the brake-lining supporting surfaces of said brake-lining holding means comprises moulding or attachment elements (15) that are formed integrally with or connected to said brake-lining holding means.

9. Disc brake according to Claim 8, **characterised in that** said attachment elements are designed as angled metal sheet elements (15) adapted to be attached to said brake support adaptor or brake calliper, which present a bent angle (17) on the end facing said brake disc (21), which is oriented in a direction towards said brake lining (3) and which limits the distance of displacement of said brake lining (3).

## Revendications

1. Frein à disque renfermant un moyen de support de la garniture de frein (2) pour une garniture de frein (3) apte à être serrée en un sens vers un disque à frein (21), comprenant une plaque d'appui de la garniture (5) et un matériau de garniture de frein (7) disposé sur la plaque, à une butée étant formée afin de limiter la distance de réglage de ladite garniture de frein (3), **caractérisé en ce que** ladite butée (9, 11, 17) à limiter la distance de réglage de ladite garniture de frein est apte à être déformée sous l'effet d'un effort de serrage de frein prédéterminé, qui peut être engendré par ledit frein à disque, **caractérisé en ce que** ladite butée (9, 11, 17) est conçue d'une telle manière, qu'elle soit capable de se déformer de manière élastique, quand un premier effort limite prédéterminé de serrage de frein est dépassé, et est capable de subir une déformation plastique ultérieure, quand un deuxième effort limite plus fort est dépassé.

2. Frein à disque selon la revendication 1, **caractérisé en ce**
(a) **qu'**au cas d'un moyen de support de la garniture de frein (2) d'un frein du type à disque à étrier coulissant, ladite butée (9, 11, 17) présente au moins un évidement (11) formé à ladite flasque de frein (1),
(b) ou, au cas d'un moyen de support de la garniture de frein d'un frein du type à disque à étrier fixe, ladite butée (9, 11, 17) présente un évidement formé audit étrier de frein,
(c) et **qu'**au moins une partie en saillie (9) dudit support (5) de la garniture de frein se trouve en prise dans ledit évidement, qui est apte à subir une déformation élastique et ensuite plastique, quand ledit effort limite de serrage de frein est dépassé.

3. Frein à disque selon une quelconque des revendications précédentes, **caractérisé en ce**
(a) **qu'**au moins une partie en saillie (9) est formée en tant que partie intégrale dudit support (5) de la garniture de frein,
(b) ou est formée en tant qu'un élément séparé, apte à être relié audit support (5) de la garniture de frein.

4. Frein à disque selon une quelconque des revendications précédentes, **caractérisé en ce que** ladite au moins une partie en saillie est configurée sous forme du bout d'une lame flexible (9), qui est façonnée ou attachée audit support (5) de la garniture de frein.

5. Frein à disque selon la revendication 4, **caractérisé en ce qu'**une lame respective parmi lesdits lames souples (9) est disposée dans la zone d'entrée et de sortie dudit support (5) de la garniture de frein, relativement au sens de rotation de la disque à frein.

6. Frein à disque selon la revendication 4 ou 5, **caractérisé en ce que** ladite au moins une lame souple (9) est libérée par découpage de manière à présenter une longueur de pliage prédéterminée dans ledit support (5) de la garniture de frein ou est fixée, en tant qu'un élément séparée à une longueur de pliage appropriée, audit support (5) de la garniture de frein.

7. Frein à disque selon une quelconque des revendications précédentes, **caractérisé en ce que** lesdits évidements (11) dans l'étrier de frein ou dans ladite flasque de frein (1) présentent une telle profondeur, que, quand l'état d'usure limite est achevé, lesdits parties en saillie (9) de ladite plaque d'appui (5) de la garniture de frein portent contre l'étrier de frein ou ladite flasque de frein (1).

8. Frein à disque selon une quelconque des revendications précédentes, **caractérisé en ce que** ladite au moins une butée sur les surfaces d'appui de la garniture de frein dudit moyen de support de la garniture de frein comprend des éléments de façonnage ou d'attache (15), qui sont formés de manière intégrale dans ledit moyen de support de la garniture de frein ou sont reliés au dernier.

9. Frein à disque selon la revendication 8, **caractérisé en ce que** lesdits élément d'attache sont conçus sous forme des éléments angulaires en tôle (15), aptes à être fixés à ladite flasque de frein ou audit étrier de frein, qui présentent un angle plié (17) à l'extrémité en face de ladite disque à frein (21), qui est orienté en un sens vers ladite garniture de frein (3) et qui limite la distance de déplacement de ladite garniture de frein (3).
